# EUROPEAN PATENT APPLICATION

(11) **EP 4 234 625 A1**
(43) Date of publication of application: **30.08.2023**
(21) Application number: 21882963.8
(22) Date of filing: 04.06.2021
(51) Int. Cl.: C08L 23/06, C08L 101/00, C08L 53/00, C08L 23/16, C08K 5/00, C08K 5/105, C08K 5/5333, H01B 11/00

(54) **COMMUNICATION CABLE COMPOSITION, AND INSULATED WIRE AND COMMUNICATION CABLE COATED WITH SAME**

(30) Priority: 23.10.2020 KR 20200138180
(71) Applicant: TSC Co., Ltd., Siheung-si Gyeonggi-do 15094 (KR); Yura Co., Ltd, Hwaseong-si, Gyeonggi-do 18529 (KR)
(72) Inventor: SEONG, Chan Yong, Siheung-si Gyeonggi-do 15033 (KR); KIM, Dong Hun, Incheon 21995 (KR); KIM, Kyoung Jin, Siheung-si Gyeonggi-do 15010 (KR); BAE, Hwan Chul, Siheung-si Gyeonggi-do 15047 (KR); KIM, Dong Wook, Ansan-si Gyeonggi-do 15468 (KR); LEE, Jo Eun, Gongju-si Chungcheongnam-do 32558 (KR); CHO, Dong Ki, Cheonan-si Chungcheongnam-do 31166 (KR); LEE, Joo Ho, Hwaseong-si Gyeonggi-do 18613 (KR); LEE, Yong Won, Hwaseong-si Gyeonggi-do 18479 (KR)
(74) Representative: Lahrtz, Fritz
(86) International application number: PCT/KR2021/006988
(87) International publication number: WO 2022/085888

(57) **Abstract**

The present invention relates to a communication cable composition, and a wire and a cable coated with same, the communication cable composition comprising 01-5 parts by weight of an antioxidant and 01-5 parts by weight of a lubricant with respect to 100 parts by weight of at least one polypropylene resin selected from among a thermoplastic olefin, a polypropylene block copolymer, and a polypropylene homopolymer. In the present invention, it is possible to produce a communication cable resin composition having excellent communication performance, heat resistance, oil resistance, and chemical resistance by using a base resin and an antioxidant, wherein various polypropylene resins are used alone or, as appropriate, in combinations as the base resin. An insulated wire and a communication cable coated with such a composition have the risk of being exposed to oil and various chemicals when used in industrial sites and automobiles and the like, and thus the stability of the cable can be further improved by increasing chemical resistance and oil resistance. In addition, the insulated wire and the communication cable increase heat resistance to the UL 105°C level when used in electronic/electrical appliances, home appliances, automobiles, etc., and thus can be used even in places requiring high heat resistance, and has the effect of reducing restrictions on installation sites as compared to existing wires and cables by achieving high heat resistance.

## Description

### Technical Field

The present invention relates to a communication cable composition, and wires and cables covered therewith. More particularly, the present invention relates to a communication cable composition containing various polypropylene resins, and insulated wires and communication cables covered therewith.

### Background Art

Recently, IT devices and appliances combined with communications have increased, and the demand for autonomous vehicles and unmanned equipment is increasing year by year. As the amount of use increases year by year, the needs of customers become more diverse, and thus chemical resistance and oil resistance are becoming important.

In particular, for applications in automotive autonomous driving, unmanned equipment, and industrial equipment, stable communication is important.

Conventionally, wires and cables covered with polyethylene or high-density polyethylene resin compositions are widely used. High-density polyethylene (HDPE) resin insulators have a heat resistance of UL 75°Cgrade. However, due to fluctuations in permittivity at high temperatures, there is a problem that the wires and cables exhibit unstable communication performance.

One of the important properties of communication cables is the rate of communication data loss. The lower the rate of data loss, the better the cable, and the data loss can be measured based on standard attenuation.

Regarding this, Korean Patent Application Publication No. 10-2009-0055310 discloses a cable with high heat resistance and high oil resistance, the cable including a conductor, a primary insulating layer surrounding the conductor, and a secondary insulating layer surrounding the primary insulating layer, in which the primary insulating layer is made of polyolefin resin, and the secondary insulating layer is made of any one selected from the group consisting of polyetherketone, polyimide, and polyphenylene sulfide.

In the patent document, the polyolefin of the primary insulating layer is crosslinked polyethylene that is widely used or ethylene-vinyl acetate (EVA) resin, and various polymers having high glass transition temperatures and continuous use temperatures and having excellent extrusion resistance are used for the secondary insulating layers to improve heat resistance. However, the patent document does not teach communication performance.

In addition, Korean Patent Application Publication No. 10-2012-0069775 discloses an insulation composition comprising: a polyolefin-based resin; and one or more hindered amine compounds selected from compounds represented by Formula 1 below as an oxidation stabilizer. In the present patent document, examples of the polyolefin-based resin include polyethylene, polypropylene, and mixtures or blends thereof. The insulation composition has excellent oxidation stability because a hindered amine compound is used as an oxidation stabilizer. In addition, the insulation composition can be stably used for a long time because the oxidation stabilizer exhibits a slow rate of migration to a cable filler during prolonged use.

Therefore, it is necessary to develop a communication cable with high heat resistance to ensure excellent communication performance even at high temperatures as well as to satisfy good communication performance at room temperature.

### Disclosure

### Technical Problem

The present invention has been made in view of the problems occurring in the related art, and an objective of the present invention is to provide a communication cable composition capable of improving heat resistance, communication efficiency, chemical resistance, and oil resistance, and of removing constraints on installation location by enabling cable installation even under extreme conditions by ensuring good heat resistance.

In addition, the present invention provides an insulated wire or communication cable covered with a communication cable composition having the same effect as described above.

### Technical Solution

One embodiment of the present invention provides a communication cable composition including: 100 parts by weight of one or more polypropylene resins selected from among thermoplastic olefins, polypropylene block copolymers, and polypropylene homopolymers;

0.1 to 5 parts by weight of an antioxidant; and 0.1 to 5 parts by weight of a lubricant.

In the communication cable composition according to one embodiment of the present invention, the polypropylene resin may be composed of 30% to 40% by weight of a thermoplastic olefin, 30% to 40% by weight of a polypropylene block copolymer, and 30% to 40% by weight of a polypropylene homopolymer.

In the communication cable composition according to one embodiment of the present invention, as the antioxidant, tetrakis[methylene-3(3',5'-di-tert-butyl-4'-hydroxyphenyl)propionate]methane) is solely used or is used in combination with tetrakis(2,4-di-tert-butyl-4'-hydroxyphenyl)propionate (P-EPQ).

In the communication cable composition according to one embodiment of the present invention, as the lubricant, a low crystalline metallocene propylene-ethylene copolymer may be used.

The present invention also provides an insulated wire or communication cable covered with a composition including: 100 parts by weight of one or more polypropylene resins selected from among thermoplastic olefins, polypropylene block copolymers, and polypropylene homopolymers; 0.1 to 5 parts by weight of an antioxidant; and 0.1 to 5 parts by weight of a lubricant.

### Advantageous Effects

The present invention provides a communication cable resin composition using one or more polypropylene resins as a base resin and additionally using an antioxidant to improve communication performance, heat resistance, oil resistance, and chemical resistance of a communication cable. Insulated wires and communication cables covered with such a composition have improved stability because of their improved chemical resistance and oil resistance even when there is the risk of exposure to oil and various chemicals when used in industrial sites and automobiles. The composition improves the heat resistance to UL 105°C grade when it is applied to electric/electronic devices, home appliances, and automobiles. Therefore, the cables covered with the composition can be used in applications requiring high heat resistance, and the composition reduces the constraints on installation sites of cables by securing high heat resistance.

### Best Mode

Hereinafter, the present invention will be described in detail.

The present invention provides a communication cable composition including: 100 parts by weight of one or more polypropylene resins selected from among thermoplastic olefins, polypropylene block copolymers, and polypropylene homopolymers; 0.1 to 5 parts by weight of an antioxidant; and 0.1 to 5 parts by weight of a lubricant, and also provides an insulated wire or communication cable manufactured from the composition.

In the process of completing present invention, it was necessary to have various approaches to obtain a resin composition having excellent communication performance, heat resistance of UL 105°C grade, oil resistance, and chemical resistance.

First, to improve the heat resistance of a polyethylene resin that was used as the base resin of a conventional communication cable composition, an effort has made to determine the best composition on the basis of the results of the combined use of base resins, antioxidants, lubricants, and other additives from the base resin.

According to the present invention, as a base resin, one or more polypropylene resins selected from among thermoplastic olefins, polypropylene block copolymers, and polypropylene homopolymers are preferably used solely to secure good heat resistance, communication performance, oil resistance, and chemical resistance.

In addition, in one preferred embodiment, a thermoplastic olefin, a polypropylene polymer, and a copolymer thereof may be used as the polypropylene resin. In this case, the composition may be a mixture of 30% to 40% by weight of the thermoplastic olefin, 30% to 40% by weight of the polypropylene block copolymer, and 30% to 40% by weight of the polypropylene homopolymer.

The term "thermoplastic olefin" used in the present invention refers to a polymer/additive blend containing a thermoplastic resin, an elastomer, a rubber, and an additive in respectively predetermined amounts. In the present invention, a product manufactured by Basell is used.

However, according to the present invention, as the base resin, a thermoplastic olefin, a polypropylene polymer, and a copolymer thereof may be used solely or in combination. However, polypropylene random copolymers and polymers such as ethylene-propylene diene rubber (EPDM) which contains polypropylene, among polypropylene copolymers, are not preferable due to poor communication performance.

In the communication cable composition according to one embodiment of the present invention, as the antioxidant to improve heat resistance, tetrakis[methylene-3(3',5'-di-tert-butyl-4'-hydroxyphenyl)propionate]methane) is solely used or is used in combination with tetrakis(2,4-di-tert-butyl-4'-hydroxyphenyl)propionate (P-EPQ).

The tetrakis(2,4-di-tert-butylphenyl-butylphenyl) 4,4-biphenyldiphosphonate) (P-EPQ^{®}) (the [product manufactured by Clariant Corporation) is preferably used a secondary antioxidant because it can reduce the thermal oxidation decomposition of polymers and the occurrence of unwanted coloring (yellowing) during the processing of the polymers and it has high thermal stability and high solubility.

The antioxidant is preferably used in an amount of 0.1 to 5 parts by weight with respect to 100 parts by weight of the base resin.

In the communication cable composition according to one embodiment of the present invention, it is preferable to use PP 1502 granules (manufactured by Clariant Corporation, low crystalline metallocene propylene-ethylene copolymer) as the lubricant, in an amount of 0.1 to 5 parts by weight with respect to 100 parts by weight of the base resin in terms of improvement in dispersibility of the resin composition.

The insulated wires and communication cables covered with the resin composition according to the present invention can be applied to industrial sites and automobiles, so that the cables are improved in stability due to their chemical resistance and oil resistance when exposed to oil and various chemicals.

In addition, when the cables are used in electric/electronic devices, home appliances, automobiles, etc., they can be used in sites where high heat resistance is required because they have the heat resistance of UL 105°C grade. That is, constraints on installation sites are reduced compared to the existing cables due to the high heat resistance thereof.

### Mode for Invention

Hereinafter, preferred examples are presented to help the understanding of the present invention. The following examples are only illustrative of the present invention, and the scope of the present invention is not limited by the examples.

### <Experimental Examples 1 to 5: Base Resin Selection Experiment-1>

To find a base resin capable of improving the heat resistance of a polyethylene resin, resins as in Experimental Examples 1 to 5 were used. In addition, an antioxidant and a lubricant were added to each of the base resins. In each experimental example, the same antioxidant and the same lubricant were used to prepare resin compositions shown in Table 1.

**[Table 1]**

| Content: parts by weight | Grade | Experimental Example | | | | | |
|---|---|---|---|---|---|---|---|
| | | 1 | 2 | 3 | 4 | 5 | 6 |
| Base resin | TPO⁽¹⁾ | 100 | - | - | - | - | - |
| | EPDM⁽²⁾ | - | 100 | - | - | - | - |
| | Block Copolymer PP⁽³⁾ | - | - | 100 | - | - | - |
| | Random Copolymer PP⁽⁴⁾ | - | - | - | 100 | - | - |
| | HOMO PP⁽⁵⁾ | - | - | - | - | 100 | - |
| | HDPE⁽⁶⁾ | - | - | - | - | - | 100 |
| Antioxidant | AO 1010⁽⁷⁾ | 0.5 | 0.5 | 0.5 | 0.5 | 0.5 | 0.5 |
| Lubricant | PP 1502⁽⁸⁾ | 0.2 | 0.2 | 0.2 | 0.2 | 0.2 | 0.2 |
| (1) Thermoplastic olefin (TPO): product manufactured by Basell | | | | | | | |
| (2) EPDM: product manufactured by The Dow Chemical Company | | | | | | | |
| (3) Block Copolymer PP: product manufactured by Korea Petrochemical Ind., Co., Ltd. | | | | | | | |
| (4) Random Copolymer PP: product manufactured by PolyMirae Company Ltd. | | | | | | | |
| (5) Homo PP: product manufactured by LG Chemicals | | | | | | | |
| (6) HDPE: product manufactured by Hanwha Chemical Co., Ltd. | | | | | | | |
| (7) AO 1010: product manufactured by Songwon Industry Co., Ltd. | | | | | | | |
| (8) PP 1502: product manufactured by Clariant, a low crystallinity metallocene propylene-ethylene copolymer | | | | | | | |

The physical properties of each resin composition obtained as described above were measured under the same conditions as described below, and the results are shown in Table 2.

### 1) Heat Resistance

Tensile strength and elongation at room temperature were measured according to IEC 60811-1-1. The tensile strength and elongation were measured under aging conditions of 136°C * 168HR required for UL 105°C Grade, to determine residual tensile strength and residual elongation. The heat resistance was determined to be good when the residual tensile strength was 80% or more and the residual elongation was 80% or more.

### 2) Communication Performance

The communication performance of a compound and the communication performance of a cable were separately measured, and the permittivity of the compound and the permittivity of the cable were measured using an impedance analyzer to compare the communication performance between the compound and the cable.
- Compound: The permittivity was measured before an aging process and after a high temperature aging test, and the change between the measurements ({[pre-aging permittivity - post aging permittivity]/pre-aging permittivity} x 100) was measured to evaluate the stability of communication performance. (High temperature aging condition; an aging tester, 105°C, 168HR, measured at room temperature after being left intact and then taken out)
- Cable: The standard attenuation, delay time, and impedance of the cable made of the selected compound were measured before an aging process and after a high temperature aging test, and the change between the measurements for each test time was obtained to evaluate measure the change amount to evaluate the stability of communication performance. (High temperature aging conditions; an aging tester, 105°C, 3000HR, measured at room temperature after being left intact and then taken out)

### 3) Oil resistance and chemical resistance

The test was measured according by the oil resistance test method according to IEC 60811-2-1. Various oil types and temperatures were set, and the results were evaluated by comparing the properties measured at room temperature and the properties measured after the oil resistance test. The oil resistance and chemical resistance were determined to be good when the residual tensile strength was 80% or more and the residual elongation was 80% or more.

**[Table 2]**

| Evaluation item | | Experimental Example | | | | | |
|---|---|---|---|---|---|---|---|
| | | 1 | 2 | 3 | 4 | 5 | 6 |
| Heat resistance: | Residual tensile rate (%) | 92 | 82 | 88 | 93 | 94 | 35 |
| | Residual elongation rate (%) | 88 | 78 | 82 | 92 | 95 | 28 |
| Communication performance | Pre-aging permittivity (25°C) | 2.25 | 2.15 | 2.38 | 2.23 | 2.31 | 2.37 |
| (compound) | Post-aging permittivity (105°C) | 2.18 | 1.95 | 2.35 | 2.11 | 2.25 | 2.32 |
| | Change (%) | 3.1 | 9.3 | 1.2 | 5.38 | 2.6 | 2.1 |
| Oil resistance IRM-902 (70°C * 4 hr) | Residual tensile rate (%) | 98 | 95 | 95 | 90 | 91 | 88 |
| | Residual elongation rate (%) | 96 | 88 | 88 | 86 | 91 | 82 |
| Chemical Resistance 1N HCl (22°C * 28 DAY) | Residual tensile rate (%) | 98 | 92 | 92 | 89 | 90 | 78 |
| | Residual elongation rate (%) | 98 | 82 | 85 | 92 | 88 | 82 |
| Chemical Resistance 1N NaOH (22°C * 28 DAY) | Residual tensile rate (%) | 95 | 88 | 90 | 86 | 93 | 85 |
| | Residual elongation rate (%) | 95 | 89 | 88 | 93 | 89 | 82 |

On the basis of the results of Table 2, it was confirmed that the composition according to Experimental Example 1 using TPO as the base resin had excellent exhibited excellent physical properties such as oil resistance and chemical resistance and the compound according to Experimental Example 3 using polypropylene block copolymer PP as the base resin had the best communication performance. In addition, it was confirmed that the compound according to Experimental Example 5 using a polypropylene homopolymer (homo PP) had a relatively good communication performance.

However, the composition according to Experimental Example 2 using EPDM and the composition according to Experimental Example 4 using a polypropylene random structure were similar to other PPs in terms of oil resistance or chemical resistance but were inferior to other PPs in terms of communication performance. Therefore, the compositions were not preferable as the communication cable composition of the present invention. In addition, the composition according to Experimental Example 6 using HDPE that was typically used as a communication resin was found to be highly vulnerable to heat.

In conclusion, the test results of various polymers (i.e., base resins) containing polypropylene revealed that the polypropylene resin and copolymer thereof according to Experimental Examples 1, 3, and 5 were suitable as base resins for communication cable compositions.

As shown in Table 2 above, it was confirmed that each resin alone satisfies the physical properties required for a communication cable composition. In the examples described below, it was intended to produce communication cable compositions having optimal physical properties by changing the composition of the base resin and changing conditions such as the addition of an antioxidant.

### <Examples 1 to 4: Preparation of Communication Cable Resin Composition (Compound) >

According to the results shown in Table 2, the resins of Experimental Examples 1, 3, and 5 were selected as base resins, and communication cable compositions were prepared by appropriately combining the resins as shown in Table 3.

**[Table 3]**

| Content: parts by weight | Grade | Example | | | |
|---|---|---|---|---|---|
| | | 1 | 2 | 3 | 4 |
| Base resin | TPO | 30 | 40 | 30 | 35 |
| | Block copolymer PP | 30 | 30 | 40 | 35 |
| | Homo PP | 40 | 30 | 30 | 30 |
| Antioxidant | AO 1010 | 0.5 | 0.5 | 0.5 | 0.5 |
| Lubricant | PP 1502 | 0.2 | 0.2 | 0.2 | 0.2 |

The physical properties of each resin composition obtained as described above were measured under the same conditions as the method described above, and the results are shown in Table 4.

**[Table 4]**

| Evaluation item | | Example | | | |
|---|---|---|---|---|---|
| | | 1 | 2 | 3 | 4 |
| Heat resistance: | Residual tensile rate (%) | 87 | 83 | 82 | 85 |
| | Residual elongation rate (%) | 85 | 80 | 81 | 83 |
| Communication performance (compound) | Pre-aging dielectric (25°C) | 2.19 | 2.21 | 2.39 | 2.31 |
| | Post-aging dielectric (105°C) | 2.08 | 2.15 | 2.35 | 2.27 |
| | Change (%) | 5 | 2.7 | 1.67 | 1.73 |
| Oil resistance | Residual tensile | 92 | 96 | 92 | 95 |
| IRM-902 (70°C * 4hr) | rate (%) | | | | |
| | Residual elongation rate (%) | 90 | 94 | 88 | 93 |
| Chemical Resistance 1N HCl (22°C * 28 DAY) | Residual tensile rate (%) | 95 | 95 | 92 | 95 |
| | Residual elongation rate (%) | 90 | 95 | 86 | 92 |
| Chemical Resistance 1N NaOH (22°C * 28 DAY) | Residual tensile rate (%) | 91 | 93 | 90 | 92 |
| | Residual elongation rate (%) | 87 | 92 | 87 | 91 |

Referring to the results shown in Table 4, it was confirmed that each composition according to the present invention had a slight difference in heat resistance, oil resistance, chemical resistance, and communication performance, but all of the compositions according to the present invention were excellent. Among them, the compositions according to Examples 3 and 4 were found to have the communication performance.

### <Examples 5 to 8: Preparation of Communication Cable Resin Composition (Compound) >

Among the compositions according to Examples 1 to 4, the composition of the base resin according to Example 4, which had the best communication performance and good physical properties, was selected. In addition, to improve the heat resistance, P-EPQ was added as an antioxidant, and the content of the P-EPQ was changed to prepare communication cable compositions shown in Table 5.

**[Table 5]**

| Content: parts by weight | Grade | Example | | | |
|---|---|---|---|---|---|
| | | 5 | 6 | 7 | 8 |
| Base resin | TPO | 35 | 35 | 35 | 35 |
| | Block copolymer PP | 35 | 35 | 35 | 35 |
| | Homo PP | 30 | 30 | 30 | 30 |
| Antioxidant | AO 1010 | 0.3 | 0.3 | 0.3 | 0.5 |
| | P-EPQ (manufactured by **Clariant**) | 0.2 | 0.3 | 0.5 | 0.5 |
| Lubricant | PP 1502 | 0.2 | 0.2 | 0.2 | 0.2 |

The physical properties of each resin composition prepared as described above were measured using the method described above, and the results are shown in Table 6.

**[Table 6]**

| Evaluation item | | Example | | | |
|---|---|---|---|---|---|
| | | 5 | 6 | 7 | 8 |
| Heat resistance: | Residual tensile rate (%) | 84 | 85 | 85 | 89 |
| | Residual elongation rate (%) | 80 | 81 | 84 | 86 |
| Communication performance (compound) | Pre-aging permittivity (25°C) | 2.31 | 2.33 | 2.38 | 2.38 |
| | Post-aging permittivity (105°C) | 2.27 | 2.30 | 2.35 | 2.36 |
| | Change (%) | 1.73 | 1.28 | 1.26 | 0.84 |
| Oil resistance IRM-902 (70°C * 4 hr) | Residual tensile rate (%) | 95 | 96 | 92 | 95 |
| | Residual elongation rate (%) | 93 | 94 | 88 | 93 |
| Chemical Resistance 1N HCl (22°C 28 DAY) | Residual tensile rate (%) | 95 | 95 | 92 | 95 |
| | Residual elongation rate (%) | 92 | 95 | 86 | 92 |
| Chemical Resistance 1N NaOH (22°C * 28 DAY) | Residual tensile rate (%) | 92 | 93 | 90 | 92 |
| | Residual elongation rate (%) | 91 | 92 | 87 | 91 |

Referring to the results of Table 6, it was confirmed that the heat resistance was improved when P-EPQ was added as an antioxidant. Particularly, the composition according to Example 8 in which the content of AO 1076 was the same as the content of P-EPQ exhibited the best heat resistance improvement effect.

### <Examples 9 to 10: Manufacturing of Communication Cable>

Through the tests of the examples, the best heat resistance was obtained from Example 8 by adjusting the content of the antioxidant added to the base resin. In the present examples, the compositions according to Examples 7 and 8 were selected to manufacture communication cables according to Examples 9 and 10, respectively, and the communication performance thereof was measured. In addition, the characteristics of the communication cables were compared with the characteristics of conventional HDPE products.

After manufacturing the communication cables, the communication cables were tested for the standard attenuation, delay time, impedance, etc. For each test item, the value measured at room temperature before aging and the value measured after high temperature (105°C) aging were measured, and it was determined that the smaller the difference, the better the characteristic. The results are shown in Tables 7 and 12 below.

**[Table 7]**

| Standard attenuation | | | | | | | | | | | | |
|---|---|---|---|---|---|---|---|---|---|---|---|---|
| Classifica tion | Cable (unit: dB/m), reference | | | | | | | | | | | |
| | Example 9) -20 m/room temperature | | | | Example 10) -20 m/room temperature | | | | HDPE -20 m/room temperature | | | |
| | Measuremen ts [dB/20 m] | | Convers ion value [dB/m] | | Measuremen ts [dB/20 m] | | Convers ion value [dB/m] | | Measuremen ts [dB/20 m] | | Convers ion value [dB/m] | |
| Frequency [GHz] | S21 | S12 | S21 | S12 | S21 | S12 | S21 | S12 | S21 | S12 | S21 | S12 |
| 0.9 | 14.09 3 | 114.10 04 | 0.7 05 | 0.7 05 | 14.41 99 | 14.43 42 | 0.7 21 | 0.7 22 | 15.56 94 | 15.57 84 | 0.7 65 | 0.7 66 |
| 1.5 | 18.80 77 | 18.80 77 | 0.9 40 | 0.9 40 | 18.77 47 | 18.77 49 | 0.9 39 | 0.9 39 | 20.77 32 | 20.77 64 | 1.0 21 | 1.0 21 |
| 1.6 | 19.50 74 | 19.50 67 | 0.9 75 | 0.9 75 | 19.48 | 19.47 95 | 0.9 74 | 0.9 74 | 21.56 27 | 21.56 57 | 1.0 60 | 1.0 60 |
| 1.9 | 21.53 | 21.54 | 1.0 | 1.0 | 21.51 | 21.52 | 1.0 | 1.0 | 23.80 | 23.79 | 1.1 | 1.1 |
| | 04 | 3 | 77 | 77 | 4 | 81 | 76 | 76 | 38 | 94 | 70 | 70 |
| 2.0 | 22.19 31 | 122.19 53 | 1.1 10 | 1.1 10 | 22.17 95 | 22.17 3 | 1.1 09 | 1.1 09 | 24.52 34 | 24.52 28 | 1.2 05 | 1.2 05 |
| 2.5 | 25.31 97 | 25.32 03 | 1.2 66 | 1.2 66 | 25.29 27 | 25.29 38 | 1.2 65 | 1.2 65 | 27.96 15 | 27.95 3 | 1.3 74 | 1.3 74 |
| 3.0 | 28.30 75 | 28.28 92 | 1.4 15 | 1.4 14 | 28.31 14 | 28.30 75 | 1.4 16 | 1.4 15 | 31.18 32 | 31.14 52 | 1.5 32 | 1.5 30 |

**[Table 8]**

| Standard attenuation | | | | | | | | | | | | |
|---|---|---|---|---|---|---|---|---|---|---|---|---|
| Classifi cation | Cable (unit: dB/m), reference | | | | | | | | | | | |
| | Example 9)-19.5 m/105°C 3000 hr | | | | Example 10)-19.5 m/105°C_3000 hr | | | | HDPE-19.5 m/105_3000 hr | | | |
| | Measurem ents [dB/19.5 m] | | Conver sion value [dB/m] | | Measurem ents [dB/19.5 m] | | Conver sion value [dB/m] | | Measurements [dB/19.5 m] | | Conversion value [dB/m] | |
| Frequenc y [GHz] | S21 | S12 | S21 | S12 | S21 | S12 | S21 | S12 | S21 | S12 | S21 | S12 |
| 0.9 | 15.1 518 | 15.1 519 | 0.7 77 | 0.7 77 | 17.4 898 | 17.4 961 | 0.8 97 | 0.8 97 | Not measur able | Not measur able | Not measur able | Not measur able |
| 1.5 | 20.5 098 | 20.5 162 | 1.0 52 | 1.0 52 | 23.8 177 | 23.8 171 | 1.2 21 | 1.2 21 | Not measur able | Not measur able | Not measur able | Not measur able |
| 1.6 | 21.3 027 | 21.3 033 | 1.0 92 | 1.0 92 | 24.7 868 | 24.7 861 | 1.2 71 | 1.2 71 | Not measur able | Not measur able | Not measur able | Not measur able |
| 1.9 | 23.6 798 | 23.6 733 | 1.2 14 | 1.2 14 | 27.5 76 | 27.5 688 | 1.4 14 | 1.4 14 | Not measur | Not measur | Not measur | Not measur |
| | | | | | | | | | able | able | able | able |
| 2.0 | 24.4 567 | 24.4 502 | 1.2 54 | 1.2 54 | 28.4 816 | 28.4 869 | 1.4 61 | 1.4 61 | Not measur able | Not measur able | Not measur able | Not measur able |
| 2.5 | 28.1 69 | 28.1 815 | 1.4 45 | 1.4 45 | 32.8 421 | 32.8 394 | 1.6 84 | 1.6 84 | Not measur able | Not measur able | Not measur able | Not measur able |
| 3.0 | 31.7 319 | 31.7 559 | 1.6 27 | 1.6 29 | 37.0 59 | 36.9 44 | 1.9 00 | 1.8 95 | Not measur able | Not measur able | Not measur able | Not measur able |

Referring to the standard attenuation results as in Tables 7 and 8, it was confirmed that the communication cables according to Examples 9 and 10 exhibited a higher standard attenuation rate than the conventional HDPE at room temperature and high temperature. In particular, it was confirmed that the communication cable of the present invention exhibited superior heat resistance to the HDPE cable of which the standard attenuation was not able to be measured because the HDPE cable was damaged through the high temperature vitrification test.

**[Table 9]**

| Delay time | | | | | | | | | | | | |
|---|---|---|---|---|---|---|---|---|---|---|---|---|
| Classification | Cable (unit: ns/m), reference | | | | | | | | | | | |
| | Example 9) -20 m/room temperature | | | | Example 10) -20 m/room temperature | | | | HDPE -20 m/room temperature | | | |
| | Measureme nts [ns/20 m] | | Convers ion value [ns/m] | | Measureme nts [ns/20 m] | | Convers ion value [ns/m] | | Measuremen ts [ns/20 m] | | Conversion value [ns/m] | |
| Frequency [GHz] | S21 | S12 | S21 | S12 | S21 | S12 | S21 | S12 | S21 | S12 | S21 | S12 |
| 0.9 | 96.9 54 | 96.9 99 | 4.8 48 | 4.8 50 | 96.1 15 | 96.1 18 | 4.8 06 | 4.8 06 | 102.4 47 | 102.5 42 | 5.0 34 | 5.0 39 |
| 1.5 | 96.8 97 | 96.9 59 | 4.8 45 | 4.8 48 | 96.6 92 | 96.7 7 | 4.8 35 | 4.8 39 | 102.4 62 | 102.5 35 | 5.0 35 | 5.0 39 |
| 1.6 | 97.0 57 | 96.9 79 | 4.8 53 | 4.8 49 | 96.6 74 | 96.8 61 | 4.8 34 | 4.8 43 | 102.5 3 | 102.3 34 | 5.0 38 | 5.0 29 |
| 1.9 | 96.9 62 | 96.9 7 | 4.8 48 | 4.8 49 | 96.7 19 | 96.7 01 | 4.8 36 | 4.8 35 | 102.5 94 | 102.3 89 | 5.0 41 | 5.0 31 |
| 2.0 | 96.9 77 | 96.9 98 | 4.8 49 | 4.8 50 | 96.7 01 | 96.6 87 | 4.8 35 | 4.8 34 | 102.4 31 | 102.4 76 | 5.0 33 | 5.0 36 |
| 2.5 | 97.0 37 | 97.0 81 | 4.8 52 | 4.8 54 | 96.8 02 | 96.7 2 | 4.8 40 | 4.8 36 | 102.2 24 | 102.3 58 | 5.0 23 | 5.0 30 |
| 3.0 | 97.0 73 | 97.0 06 | 4.8 54 | 4.8 50 | 96.7 44 | 96.5 02 | 4.8 37 | 4.8 25 | 102.4 94 | 102.5 78 | 5.0 37 | 5.0 41 |

**[Table 10]**

| Delay time | | | | | | | | | | | | |
|---|---|---|---|---|---|---|---|---|---|---|---|---|
| Classifi cation | Cable (unit: ns/m), reference | | | | | | | | | | | |
| | Example 9) - 19.5 m/105°C 3000 hr | | | | Example 10) - 19.5 m/105°C 3000 hr | | | | HDPE - 19.5 m/105_3000 hr | | | |
| | Measure ments [ns/19. 5 m] | | Conver sion value [ns/m] | | Measurem ents [ns/19.5 m] | | Conver sion value [ns/m] | | Measurements [ns/19.5 m] | | Conversion value [ns/m] | |
| Frequenc y [GHz] | S21 | S12 | S21 | S12 | S21 | S12 | S21 | S12 | S21 | S12 | S21 | S12 |
| 0.9 | 97. 089 | 97. 118 | 4.9 79 | 4.9 80 | 112. 859 | 112. 66 | 5.7 88 | 5.7 77 | Not measur able | Not measur able | Not measur able | Not measur able |
| 1.5 | 97. 175 | 97. 024 | 4.9 83 | 4.9 76 | 112. 815 | 112. 805 | 5.7 85 | 5.7 85 | Not measur able | Not measur able | Not measur able | Not measur able |
| 1.6 | 97. 116 | 97. 051 | 4.9 80 | 4.9 77 | 112. 869 | 112. 953 | 5.7 88 | 5.7 92 | Not measur able | Not measur able | Not measur able | Not measur able |
| 1.9 | 97. 091 | 97. 081 | 4.9 79 | 4.9 79 | 112. 729 | 112. 682 | 5.7 81 | 5.7 79 | Not measur able | Not measur able | Not measur able | Not measur able |
| 2.0 | 97. 06 | 97. 099 | 4.9 77 | 4.9 79 | 112. 547 | 112. 678 | 5.7 72 | 5.7 78 | Not measur able | Not measur able | Not measur able | Not measur able |
| 2.5 | 97. 247 | 97. 001 | 4.9 87 | 4.9 74 | 112. 661 | 112. 881 | 5.7 77 | 5.7 89 | Not measur able | Not measur able | Not measur able | Not measur able |
| 3.0 | 97. 172 | 96. 985 | 4.9 83 | 4.9 74 | 112. 698 | 112. 719 | 5.7 79 | 5.7 80 | Not measur able | Not measur able | Not measur able | Not measur able |

Referring to the delay time measurement results as in Tables 9 and 10, it was confirmed that the communication cables according to Examples 9 and 10 exhibited a better characteristic in delay time than the conventional HDPE cable at room temperature and high temperature. In particular, the delay time of the HDPE cable was not able to be measured because the HDPE cable was damaged through the high temperature vitrification test.

**[Table 11]**

| Impedance | | | | | | | |
|---|---|---|---|---|---|---|---|
| Classification | Spec | Cable (unit: Ω), reference | | | | | |
| | | Example 9) - 20 m | | Example 10) - 20 m | | HDPE - 20 m | |
| | | Measurements | | Measurements | | Measurements | |
| 0.9 to 3.0 GHz | 50±2 Ω | S11 | S22 | S11 | S22 | S11 | S22 |
| | | 51.967 | 51.386 | 50.112 | 50.536 | 51.143 | 51.906 |

**[Table 12]**

| Impedance | | | | | | | |
|---|---|---|---|---|---|---|---|
| Classif ication | Spec | Cable (unit: Ω), reference | | | | | |
| | | Example 9) - 19.5 m/105°C 3000 hr | | Example 10) - 19.5 m/105°C 3000 hr | | HDPE - 19.5 m/105°C 3000 hr | |
| | | Measurements | | Measurements | | Measurements | |
| 0.9 to 3.0 GHz | 5012 Ω | S11 | S22 | S11 | S22 | S11 | S22 |
| | | 51.286 | 48.731 | 50.861 | 51.045 | Not measurab le | Not measurab le |

Referring to the impedance measurement results as in Tables 11 and 12, it was confirmed that at room temperature, the impedance of each of the communication cables according to Examples 9 and 10 was not significantly different from that of the conventional HDPE cable. However, after the high temperature vitrification test, the impedance of the HDPE cable was not able to be measured because the HDPE cable was damaged while the communication cables of the present invention exhibited excellent impedance characteristics.

The test results described above reveal that it is possible to manufacture communication cables having excellent communication performance, heat resistance, oil resistance, and chemical resistance by using a polypropylene resin in which a PP polymer and a copolymer thereof are mixed, as a base resin, and adjusting the composition of the antioxidant.

## Claims

1. A composition for a communication cable, the composition comprising: 100 parts by weight of one or more polypropylene resins selected from among thermoplastic olefins, polypropylene block copolymers, and polypropylene homopolymers; 0.1 to 5 parts by weight of an antioxidant; and 0.1 to 5 parts by weight of a lubricant.

2. The composition of claim 1, wherein the polypropylene resin comprises 30% to 40% by weight of a thermoplastic olefin, 30% to 40% by weight of a polypropylene block copolymer, and 30% to 40% by weight of a polypropylene homopolymer.

3. The composition of claim 1, wherein as the antioxidant, tetrakis[methylene-3(3',5'-di-tert-butyl-4'-hydroxyphenyl)propionate]methane) is solely used or is used in combination with tetrakis(2,4-di-tert-butyl-4'-hydroxyphenyl)propionate (P-EPQ).

4. The composition of claim 1, wherein the lubricant is a low crystalline metallocene propylene-ethylene copolymer.

5. An insulated wire or communication cable covered with a composition including 100 parts by weight of one or more polypropylene resins selected from among thermoplastic olefins, polypropylene block copolymers, and polypropylene homopolymers, 0.1 to 5 parts by weight of an antioxidant, and 0.1 to 5 parts by weight of a lubricant.
